# EUROPEAN PATENT APPLICATION

(11) **EP 4 215 763 A1**
(43) Date of publication of application: **26.07.2023**
(21) Application number: 21869134.3
(22) Date of filing: 26.08.2021
(51) Int. Cl.: F16B 2/06, F28D 1/03, F28D 9/02, F28F 3/08

(54) **CLAMP DEVICE AND STACKED HEAT CONVERTER**

(30) Priority: 15.09.2020 JP 2020154432
(71) Applicant: Toyo Engineering Corporation, Tokyo 105-0003 (JP)
(72) Inventor: SATO Takeshi, Narashino-shi, Chiba 275-0024 (JP); NAGATA Satoshi, Narashino-shi, Chiba 275-0024 (JP); SAKAI Kenji, Narashino-shi, Chiba 275-0024 (JP)
(74) Representative: Hamer, Christopher K.
(86) International application number: PCT/JP2021/031272
(87) International publication number: WO 2022/059447

(57) **Abstract**

Clamping device 20 is a clamping device for clamping and fixing core 10, whose interior is divided into multiple flow channels F1, F2 by plates 11 that are stacked, of stacked heat exchanger 1 in stacking direction Z of plates 11, including: two end plates 21, 22 placed on both sides of core 10 in stacking direction Z; connecting member 23 connecting two end plates 21, 22 to keep two end plates 21, 22 apart by a distance greater than a length of core 10 in stacking direction Z; and bolts 24 inserted respectively into thread through-holes 21a, 22a formed on each of end plates 21, 22 for pressing core 10 in stacking direction Z.

## Description

### Technical Field

The present invention relates to a clamping device and a stacked heat exchanger.

### Background Art

Conventionally, a plate-fin heat exchanger is known as a compact and lightweight stacked heat exchanger with excellent heat exchange efficiency (see, for example, Patent Literatures 1-4). The plate-fin heat exchanger includes a core having a plurality of plates and a plurality of fins stacked alternately with the plates. The interior of the core is divided into multiple flow channels by the plates, and heat exchange takes place when two or more fluids flow through the multiple flow channels. The plates and fins are typically joined together by brazing, which improves both the pressure resistance and heat transfer performance of the core.

### Citation List

### Patent Literature

Patent Literature 1: JP 2015-152225 A
Patent Literature 2: JP 2014-040945 A
Patent Literature 3: JP 2012-255646 A
Patent Literature 4: JP 2006-313030 A

### Summary of the Invention

### Technical Problem

In the plate-fin heat exchanger, the number of brazed joints between the plates and fins is enormous, but even a single defective joint will immediately affect the pressure resistance of the core. Therefore, brazing of the plates and fins requires high reliability in terms of joint strength and quality. However, to achieve this, large-scale facilities such as vacuum furnaces are required, and specialized and advanced technology and knowledge are required. For that reason, it is quite difficult to exhibit stable pressure resistance and heat transfer performance. In addition, as materials of the plate and fin, materials that can be brazed stably on an industrial scale and at a reasonable cost must be selected. Therefore, the degree of freedom in material selection is low, and there is a limit to achieving both pressure resistance and heat transfer performance at a high level.

It is therefore an object of the present invention to allow any combination of materials constituting a core and to improve the pressure resistance and heat transfer performance of a stacked heat exchanger with a simple structure.

### Solution to Problem

To achieve the above object, a clamping device according to the present invention is a clamping device for clamping and fixing a core, whose interior is divided into a plurality of flow channels by a plurality of plates that are stacked, of a stacked heat exchanger in a stacking direction of the plurality of plates, the device including: two end plates placed on both sides of the core in the stacking direction; a connecting member connecting the two end plates to keep the two end plates apart by a distance greater than a length of the core in the stacking direction; and a plurality of bolts inserted respectively into a plurality of threaded through-holes formed in each of the end plates for pressing the core in the stacking direction.

A stacked heat exchanger according to the present invention includes: a core including a plurality of plates stacked so that an interior of the core is divided into a plurality of flow channels; and a clamping device as described above for clamping and fixing the core in a stacking direction of the plurality of plates.

According to the clamping device and the stacked heat exchanger, even if the pressure of a fluid creates internal pressure on the core, by being pressed by the bolts, the core is prevented from being damaged due to expansion and good contact between its components including the plates is maintained, which improves the pressure resistance and heat transfer performance of the core. This eliminates the need to mechanically join the components of the core, including the plates, by a known joining method such as brazing or welding. As a result, the degree of freedom in material selection is increased, which also allows selection of a combination of materials that achieves both pressure resistance and heat transfer performance at a high level.

### Advantageous Effects of Invention

As described above, according to the present invention, any combination of materials constituting the core is allowed, and the pressure resistance and heat transfer performance of the stacked heat exchanger can be improved with a simple structure.

### Brief Description of the Drawings

FIG. 1A is a schematic perspective view of a heat exchanger according to a first embodiment of the present invention;
FIG. 1B is a schematic cross-sectional view of the heat exchanger of the first embodiment of the present invention;
FIG. 2 is a schematic perspective view of the heat exchanger according to a second embodiment of the present invention.; and
FIG. 3 is a schematic perspective view of the heat exchanger of a third embodiment of the present invention.

### Description of Embodiments

Embodiments of the present invention will be described below with reference to the drawings. Although a plate-fin heat exchanger is exemplified herein, a stacked heat exchanger to which a clamping device according to the present invention is applied is not limited to thereto and may be a plate heat exchanger, as described below. The term "heat exchanger" as used herein includes a heat exchanger in which a catalytic reaction takes place due to the filling of a catalyst into a flow channel for passage of a fluid, i.e., a catalytic reactor.

### (First embodiment)

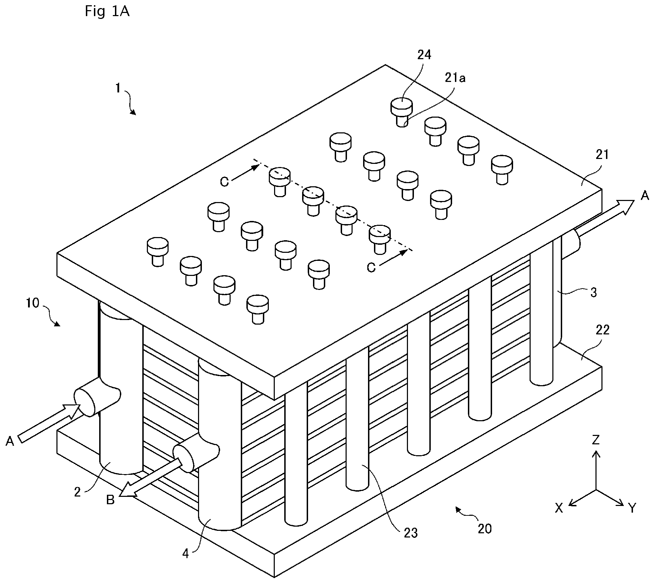

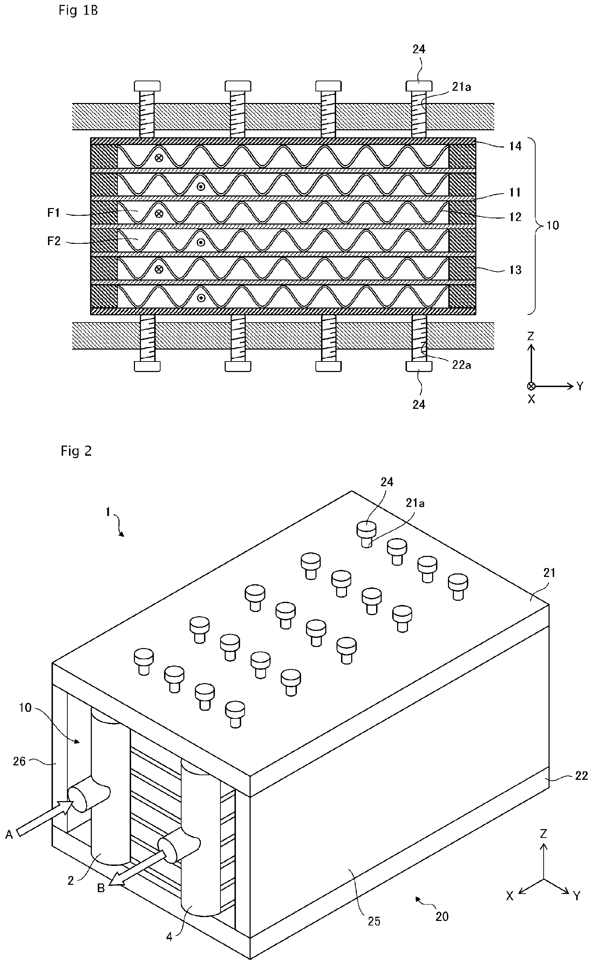

FIG. 1A is a schematic perspective view of a heat exchanger of a first embodiment of the present invention. FIG. 1B is a schematic cross-sectional view taken along line C-C line in FIG. 1A. The arrangement of the heat exchanger shown in FIG. 1 is provided for convenience only and does not limit the position of the heat exchanger when used. Directional terms such as "upper" and "lower" as used in the following description are also used in a relative sense and do not limit the position of the heat exchanger when used.

Heat exchanger 1 includes cuboid-shaped core 10 in which heat exchange takes place between first fluid A and second fluid B. Core 10 includes rectangular-shaped plates 11 and corrugated fins 12. Plates 11 are stacked so that the interior of core 10 is divided into multiple flow channels F1, F2, and each of fins 12 is placed in contact with upper and lower plates 11 in each of flow channels F1, F2. Therefore, plates 11 and fins 12 are alternately stacked. Hereinafter, the stacking direction of plates 11 is referred to as a Z direction, and the longitudinal and transverse directions of plate 11 orthogonal to this direction are referred to as X and Y directions, respectively.

Flow channels F1, F2 are composed of first flow channel F1 for passage of first fluid A and second flow channel F2 arranged alternately with first flow channel F1 in the Z direction for passage of second fluid B. Each of flow channels F1, F2 is formed by plates 11 and side bars 13 arranged around the periphery of plate 11 to surround fin 12. Side bars 13 are joined to upper and lower plates 11 by a known joining method such as brazing or welding, thereby enabling each of flow channels F1, F2 to be closed. As described below, fin 12 may not necessarily be joined to upper and lower plates 11. In addition, core 10 includes side plate 14 that forms the outermost surface of core 10 in the Z direction.

Heat exchanger 1 also includes first inlet header 2 and first outlet header 3 that communicate with first flow channel F1. First inlet header 2 is attached to one end face of core 10 in the X direction and functions to allow first fluid A to flow into core 10. First outlet header 3 is attached to the other end face of core 10 in the X direction and functions to allow first fluid A to flow out of core 10. Therefore, first fluid A flows into first flow channel F1 through first inlet header 2, flows through core 10 from one end face to the other end face thereof (i.e. from a side facing out of the page to a side facing into the page in FIG. 1(b)), and then flows out of first flow channel F1 through first outlet header 3.

Heat exchanger 1 also includes second inlet header (not shown) and second outlet header 4 that communicate with second flow channel F2. The second inlet header (not shown) is attached to the other end face of core 10 in the X direction and functions to allow second fluid B to flow into core 10. Second outlet header 4 is attached to one end face of core 10 in the X direction and functions to allow second fluid B to flow out of core 10. Therefore, second fluid B flows into second flow channel F2 through the second inlet header, flows through core 10 from the other end face to one end face thereof (i.e. from the side facing into the page to the side facing out of the page in FIG. 1(b)), and then flows out of second flow channel F2 through second outlet header 4.

Furthermore, heat exchanger 1 includes clamping device 20 for clamping and fixing core 10 in the Z direction (i.e. the stacking direction of plates 11).

Clamping device 20 includes two end plates 21, 22, rods 23, and pressing bolts 24. Two end plates 21, 22 are placed on both sides of core 10 in the Z direction and are connected by rods 23 to be parallel to each other. Two end plates 21, 22 are connected by rods 23 to be kept apart by a distance greater than the length of core 10 in the Z direction. Each of end plates 21, 22 has threaded through-holes 21a, 22a formed therein. Pressing bolts 24 are inserted into threaded through-holes 21a, 22a in each of end plates 21, 22 to press core 10 from both sides in the Z direction.

With this configuration of clamping device 20, even if the pressure of fluids A, B creates internal pressure on core 10, core 10 can be prevented from expanding and being damaged by being pressed by pressing bolts 24. As a result, core 10 can acquire sufficient pressure resistance, which eliminates the need to mechanically join its components, i.e. plate 11 and fin 12, by a known joining method such as brazing or welding. The reduced expansion of core 10 also enables good thermal contact between plate 11 and fin 12 at all times. As a result, the heat transfer performance of core 10 can also be well maintained. In addition, since plate 11 and fin 12 are in thermal contact with each other at all times, it is not necessary to mechanically join plate 11 and fin 12 by a known joining method such as brazing or welding in terms of heat transfer performance. Therefore, the degree of freedom in selecting materials for plate 11 and fin 12 is increased, which also allows selection of a combination of materials that achieves both pressure resistance and heat transfer performance at a high level.

For example, until now, when stainless steel was used as a material of the plate from the standpoint of mechanical strength, the use of copper could not be considered as a material of the fin responsible for the pressure resistance of the core. The reason is that copper has low mechanical strength, and it is difficult to braze copper to stainless steel stably on an industrial scale and at a reasonable cost. However, in this embodiment, even if stainless steel is used as the material of plate 11, copper can be used as the material of fin 12 in terms of thermal conductivity. The elimination of such material restrictions is particularly useful when heat exchanger 1 of this embodiment is used as a catalytic reactor. Depending on the materials selected, plate 11 and fin 12 may be joined by a known joining method such as brazing or welding to further improve pressure resistance and heat transfer performance.

The material of end plates 21, 22 is not particularly limited as long as it is highly rigid and strong enough to withstand the reaction force of pressing bolts 24, and their shape and dimensions (such as thickness) are also not particularly limited. In the illustrated configuration, the shape of end plates 21, 22 is rectangular to match the shape of core 10, but may be other geometric shapes, such as, for example, polygonal.

The material of rod 23 is also not particularly limited, but is preferably the same as the material of end plates 21, 22, and for example, stainless steel may be used as such a material. The cross-sectional shape of rod 23 is not limited to a circular shape as illustrated, but may be other geometric shapes such as polygonal, and its dimensions (such as diameter) are also not particularly limited. In the illustrated configuration, five rods 23 are provided on each side of core 10 in the Y direction, but the number of rods 23 is not limited thereto as long as the connection between end plates 21, 22 can be well maintained, and may be four or less or six or more. The position of rods 23 is also not limited to the illustrated one and may be appropriately changed according to, for example, the position of headers 2-4 with respect to core 10. The method of fixing end plates 21, 22 and rods 23 is not particularly limited as long as they are fixed with sufficient strength not to be unfixed even when the reaction force of pressing bolts 24 acts on end plates 21, 22. For example, a known method such as welding or screwing may be used as such a fixation method.

The material of pressing bolts 24 is not particularly limited, but is preferably the same as the material of end plates 21, 22. The arrangement and dimensions of pressing bolts 24 are not particularly limited as long as the desired pressing force can be applied to core 10. In the illustrated configuration, pressing bolts 24 are arranged in a rectangular grid on each of end plates 21, 22, but the arrangement of pressing bolts 24 is not limited thereto and may be other grid arrangements such as square or triangular grid, or other periodic arrangements. Alternatively, pressing bolts 24 may be arranged aperiodically.

The method and order of tightening pressing bolts 24 are not limited to any particular tightening method and order, as long as the desired pressing force can be applied to core 10. For example, on each side of core 10 in the Z direction, four bolts at corners of pressing bolts 24 arranged in a grid may be tightened first to position core 10 with respect to clamping device 20, and then pressing bolts 24 may be tightened with appropriate torque to apply the desired pressing force to core 10. The configuration in which core 10 is pressed from both sides in the Z direction by pressing bolts 24 is also advantageous in that the amount of tightening of pressing bolts 24 can be adjusted to accommodate machining and assembly errors of core 10 and clamping device 20 as well as deformation of core 10 and clamping device 20 due to load during pressing.

Bolts 24 may be tightened with different torques, i.e., may press core 10 with different pressing forces. For example, when the internal pressure of core 10 increases, leakage of fluids A, B is likely to occur at the periphery of plate 11 to which side bars 13 are joined. Therefore, in the peripheral region of core 10 that corresponds to where plate 11 and side bars 13 are joined together, core 10 is preferably pressed with a pressing force greater than in the region inside it. When core 10 is thus pressed with different pressing forces by bolts 24, bolts 24 are preferably arranged in a grid as illustrated because the distribution of pressing forces on core 10 can be easily controlled arbitrarily and accurately.

The configuration of core 10 is not limited to the illustrated one. For example, FIG. 1B shows three first flow channels F1 and three second flow channels F2, but the numbers of flow channels F1, F2 are not limited thereto and may be four or more, respectively. In the illustrated configuration, first fluid A and second fluid B flow in parallel but opposite directions (along the X direction), but they may flow in the same direction (along the X direction). Alternatively, first fluid A and second fluid B may flow in directions orthogonal to each other. In other words, one of two fluids A, B may flow in the X direction and the other in the Y direction. Accordingly, one of the two sets of headers 2-4 may be attached to the end face of core 10 in the X direction and the other to the end face of core 10 in the Y direction. Core 10 may be designed so that heat exchange takes place between three or more different fluids, and accordingly, three or more sets of inlet and outlet headers may be provided.

The shape of fins 12 is also not limited to the illustrated one, and may be appropriately changed to the extent that they have sufficient strength to withstand the pressing force of pressing bolts 24. However, instead of shaping fins 12 to have sufficient strength, a plurality of spacers (not shown) may be provided between plates 11 at positions where the spacers overlap pressing bolts 24 when viewed from the Z direction. Thus, the pressing force of pressing bolts 24 can be received by the spacers. Fins 12 may have different shapes for each of flow channels F1, F2 where they are placed.

Although not shown, heat exchanger 1 of this embodiment may be used while being stored in another pressure vessel.

In the embodiment as described above, core 10 having a plate-fin type structure is exemplified, but the core structure to which clamping device 20 of this embodiment is applied is not limited thereto and may be a plate type structure including a plurality of stacked heat transfer plates. Plate heat exchangers are classified into several categories depending on the method of sealing the heat transfer plates. Specifically, they are classified into categories such as: a gasket type in which the heat transfer plates corrugated by press working, etc. are stacked through a gasket; a welding type in which the heat transfer plates corrugated likewise are welded together along the peripheries thereof; and a diffusion bonding type in which the heat transfer plates with flow channels formed by etching, etc. are joined together by diffusion bonding. In any of these categories of plate heat exchangers, clamping device 20 of this embodiment can be used to prevent expansion and damage of the core due to internal pressure and to improve the pressure resistance and heat transfer performance of the core.

### (Second embodiment)

FIG. 2 is a schematic perspective view of the heat exchanger according to a second embodiment of the present invention. Hereinafter, components identical to those of the first embodiment will be denoted by the same reference numerals in the drawings, description thereof will be omitted, and only components that are different from those of the first embodiment will be described.

This embodiment differs from the first embodiment in terms of the configuration of a connecting member that connects two end plates 21, 22. Specifically, in the first embodiment, rods 23 are provided on each side of core 10 in the Y direction, whereas in this embodiment, one flat plate 25, 26 is provided on each side thereof. Thus, clamping device 20 of this embodiment is formed in a rectangular tube shape by two end plates 21, 22 and two flat plates 25, 26. With this configuration, the entire structural strength of clamping device 20 can be improved, and as a result, a greater pressing force can be applied to core 10.

### (Third embodiment)

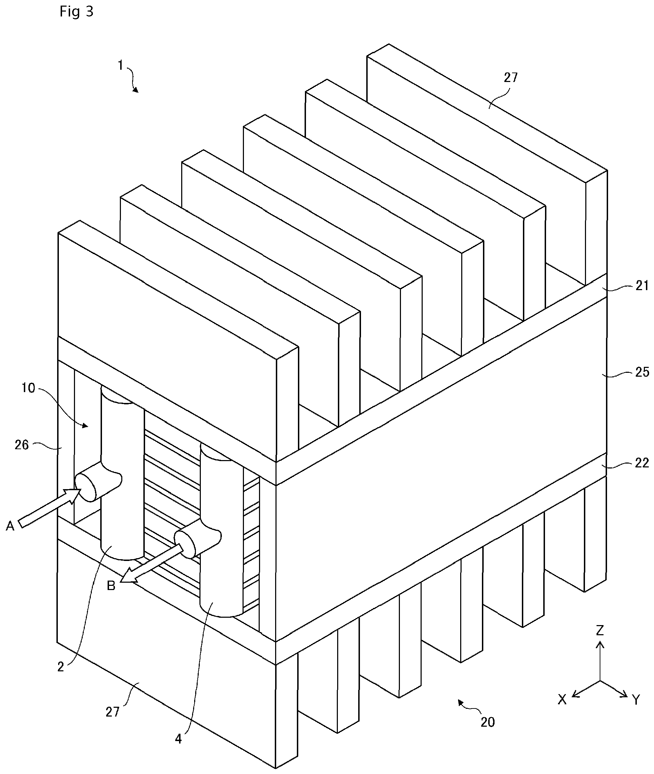

FIG. 3 is a schematic perspective view of the heat exchanger according to a third embodiment of the present invention. Hereinafter, components identical to those of the above embodiments will be denoted by the same reference numerals in the drawings, description thereof will be omitted, and only components that are different from those of the above embodiments will be described.

This embodiment is a variation of the second embodiment and differs from the second embodiment in that reinforcing ribs 27 are additionally provided. Reinforcing ribs 27 are formed respectively on opposite faces of two end plates 21, 22, each protruding in the Z direction (i.e. the thickness direction of end plates 21, 22). Reinforcing ribs 27 are arranged parallel to each other along the Y direction (i.e. the transverse direction of end plates 21, 22) and are equally spaced in the X direction (i.e. the longitudinal direction of end plates 21, 22). The term "equally spaced" as used herein includes not only cases where the intervals of reinforcing ribs 27 (i.e. the distances between the centers thereof in the thickness direction) are strictly equal to each other, but also cases where they differ from each other by an amount smaller than the manufacturing error. With this configuration, the rigidity of end plates 21, 22 can be improved, and the entire structural strength of clamping device 20 can be further improved. The shape and dimensions (such as thickness) of reinforcing ribs 27 and the number thereof are not limited to those as illustrated and may be appropriately changed according to the shape and required strength of end plates 21, 22.

In this embodiment, since reinforcing ribs 27 are provided, each of end plates 21, 22 may be thinner than in the second embodiment. It goes without saying that reinforcing ribs 27 of this embodiment may be additionally installed to clamping device 20 of the first embodiment.

### Reference Signs List

- 1: Heat exchanger
- 2: First inlet header
- 3: First outlet header
- 4: Second outlet header
- 10: Core
- 11: Plate
- 12: Fin
- 13: Side bar
- 14: Side plate
- 20: Clamping device
- 21, 22: End plate
- 21a, 22a: Threaded through-hole
- 23: Rod
- 24: Pressing bolt
- 25, 26: Flat plate
- 27: Reinforcing rib

## Claims

1. A clamping device for clamping and fixing a core, whose interior is divided into a plurality of flow channels by a plurality of plates that are stacked, of a stacked heat exchanger in a stacking direction of the plurality of plates, the device comprising:
two end plates placed on both sides of the core in the stacking direction;
a connecting member connecting the two end plates to keep the two end plates apart by a distance greater than a length of the core in the stacking direction; and
a plurality of bolts inserted respectively into a plurality of threaded through-holes formed in each of the end plates for pressing the core in the stacking direction.

2. The clamping device according to claim 1, wherein the plurality of bolts includes first and second bolts that press the core with different pressing forces.

3. The clamping device according to claim 2, wherein the first bolt presses a peripheral region of the core, wherein the second bolt presses a region of the core that is inside the peripheral region, and wherein a pressing force of the first bolt is greater than a pressing force of the second bolt.

4. The clamping device according to any one of claims 1 to 3, wherein the plurality of bolts is arranged in a grid on each of the end plates.

5. The clamping device according to any one of claims 1 to 4, further comprising a plurality of reinforcing ribs formed on each of opposite faces of the two end plates and protruding in a thickness direction of the end plates.

6. The clamping device according to claim 5, wherein each of the end plates is formed in a rectangular shape and the plurality of reinforcing ribs is arranged parallel to each other along a transverse direction of the end plates.

7. The clamping device according to claim 6, wherein the plurality of reinforcing ribs is equally spaced in a longitudinal direction of the end plates.

8. The clamping device according to any one of claims 1 to 7, wherein the connecting member connects the core on both sides of the core in a direction orthogonal to the stacking direction.

9. The clamping device according to claim 8, wherein the connecting member is composed of a plurality of rods.

10. The clamping device according to claim 8, wherein the connecting member is composed of two flat plates.

11. A stacked heat exchanger comprising:
a core including a plurality of plates stacked so that an interior of the core is divided into a plurality of flow channels; and
a clamping device according to any one of claims 1 to 10 for clamping and fixing the core in a stacking direction of the plurality of plates.

12. The stacked heat exchanger according to claim 11, wherein the core includes a plurality of fins stacked alternately with the plurality of plates.

13. The stacked heat exchanger according to claim 12, wherein the core includes a plurality of spacers placed between the plurality of plates together with the plurality of fins, the plurality of spacers overlapping each other when viewed from the stacking direction, and the plurality of bolts presses the core at positions where the plurality of bolts overlaps the plurality of spacers when viewed from the stacking direction.
